# EUROPEAN PATENT SPECIFICATION

(11) **EP 3 318 525 B1**
(45) Date of publication and mention of the grant of the patent: **10.06.2020**
(21) Application number: 17200212.3
(22) Date of filing: 06.11.2017
(51) Int. Cl.: B66B 7/06, B66B 7/08

(54) **ELEVATOR SYSTEM SUSPENSION MEMBER TERMINATION**
AUFHÄNGUNGSELEMENTABSCHLUSS EINES AUFZUGSSYSTEMS
TERMINAISON D'ÉLÉMENT DE SUSPENSION DE SYSTÈME D'ASCENSEUR

(30) Priority: 07.11.2016 US 201662418344 P
(43) Date of publication of application: 09.05.2018
(73) Proprietor: Otis Elevator Company, Farmington, Connecticut 06032 (US)
(72) Inventor: FARGO, Richard N., Chatham New Hampshire 03813 (US); GURVICH, Mark R., East Hartford, CT Connecticut 06108 (US); ERICSON, Richard J., Farmington, CT Connecticut 06032 (US); LOGAN, Douglas E., East Hartford, CT Connecticut 06108 (US); WESSON, John P., West Hartford, CT Connecticut 06107 (US); MCKEE, David Wayne, Farmington, CT Connecticut 06032 (US); ZHAO, Wenping, East Hartford, CT Connecticut 06108 (US)
(74) Representative: Dehns

(56) References cited:
- EP-A1- 2 878 563
- EP-A1- 3 040 301

## Description

### BACKGROUND

The subject matter disclosed herein relates to elevator systems. More particularly, the present disclosure relates to termination of suspension members of elevator systems.

A typical elevator system includes an elevator car, suspended by one or more suspension members, typically a rope or belt, that moves along a hoistway. The suspension member includes one or more tension members and is routed over one or more sheaves, with one sheave, also known as a drive sheave, operably connected to a machine. The machine drives movement of the elevator car via interaction of the drive sheave with the suspension member. The elevator system further typically includes a counterweight interactive with the suspension member. One or more of the ends of the suspension member are terminated, or retained in the hoistway.

Elevator rope or belt terminations used today rely on the ability to either wrap the rope or belt around a wedge, or the ability to spread the individual wires of the rope and create a knob by placing the spread wires into a socket and potting with a material such as a Babbitt or epoxy-based potting compound. These typical methods do not work for suspension members that utilize tension members formed from or including unidirectional carbon fibers in a rigid matrix. In such an arrangement, the tension member will fracture if bent around a typical wedge radius, and the carbon fibers are not able to be spread and bent to be utilized in the potted arrangement. Methods of terminating the suspension member which do not require such deformation occupy significant amounts of space and require a relatively high clamping force to retain the suspension member. Such methods are prone to undertightening, resulting in slippage of the suspension member.

EP 2878563 A1 discloses a rope terminal assembly of an elevator comprising a rope, a wedge element, a wedge housing and a rope gap.

EP 304301 A1 discloses a rope terminal assembly of a hoisting apparatus having a first compression member and a second compression member defining a gap therebetween, wherein a rope having a thermoplastic polymer coating is placed in the gap.

### BRIEF SUMMARY

From a first aspect, a suspension member for suspending and/or driving an elevator car of an elevator system as claimed in claim 1 is provided.

Additionally or alternatively, in this or other embodiments the plurality of fibers are one or more of carbon, glass, polyester, nylon or aramid fibers.

Additionally or alternatively, in this or other embodiments the plurality of fibers extend continuously along the length of the suspension member.

Additionally or alternatively, in this or other embodiments one or more thermoplastic layers are positioned in the suspension member. The one or more thermoplastic layers are configured to be softened at a suspension member end to allow for deformation of the suspension member end.

Additionally or alternatively, in this or other embodiments the suspension member end is configured to be deformed by application of heat and/or solvent to the suspension member end.

Additionally or alternatively, in this or other embodiments the suspension member end is deformed by dividing each tension member of the plurality of tension members.

Additionally or alternatively, in this or other embodiments the suspension member end is deformed by selectively moving or curving tension members of the plurality of tension members into first tension members and second tension members.

From a further aspect, an elevator system as claimed in claim 6 is provided.

Additionally or alternatively, in this or other embodiments the plurality of fibers extend continuously along the length of the suspension member.

Additionally or alternatively, in this or other embodiments the suspension member includes a wedge-shaped cross-section at the suspension member end installed into a socket of the termination assembly.

Additionally or alternatively, in this or other embodiments the wedge-shaped cross-section is formed via the addition of additional suspension member layers at an external surface of the suspension member at the suspension member end.

Additionally or alternatively, in this or other embodiments the wedge-shaped cross-section is formed via the addition of additional suspension member layers between internal surfaces of the suspension member at the suspension member end.

Additionally or alternatively, in this or other embodiments the suspension member end is deformed by dividing each tension member of the plurality of tension members.

Additionally or alternatively, in this or other embodiments the suspension member end is deformed by selectively moving or curving tension members of the plurality of tension members into first tension members and second tension members.

In yet another embodiment, a method of installing a suspension member of an elevator system into a termination assembly as claimed in claim 10 is provided.

Additionally or alternatively, in this or other embodiments the load is applied to the suspension member end prior to curing and/or hardening of the suspension member end.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic view of an exemplary elevator system;
FIG. 1A is a schematic view of another exemplary elevator system;
FIG. 2 is a cross-sectional view of an embodiments of a suspension member for an elevator system;
FIG. 3 illustrates an embodiment of a termination for a suspension member for an elevator system which does not fall within the scope of the claimed invention;
FIG. 4 illustrates another embodiment of a termination for a suspension member which does not fall within the scope of the claimed invention;
FIG. 5 illustrates yet another embodiment of a termination for a suspension member which does not fall within the scope of the claimed invention;
FIG. 6 illustrates another embodiment of a termination for a suspension member of an elevator system;
FIG. 7 illustrates still another embodiment of a termination for a suspension member of an elevator system;
FIG. 8A is a perspective view of an embodiment of a suspension member end which does not fall within the scope of the claimed invention;
FIG. 8B is a cross-sectional view of an embodiment of a suspension member end which does not fall within the scope of the claimed invention;
FIG. 8C is a cross-sectional view of another embodiment of a suspension member end; and
FIG. 8D is a cross-sectional view of yet another embodiment of a suspension member end which does not fall within the scope of the claimed invention.

### DETAILED DESCRIPTION

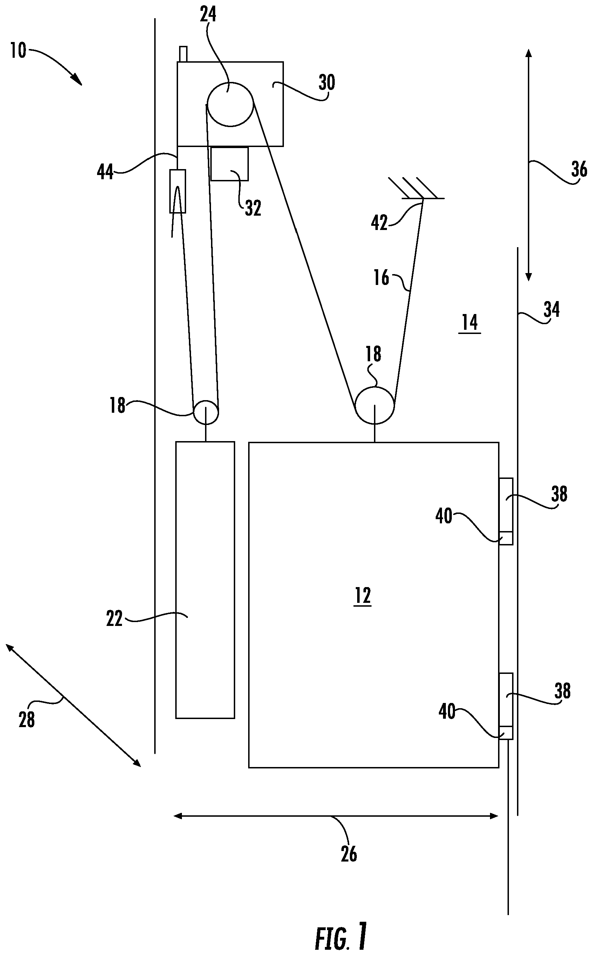

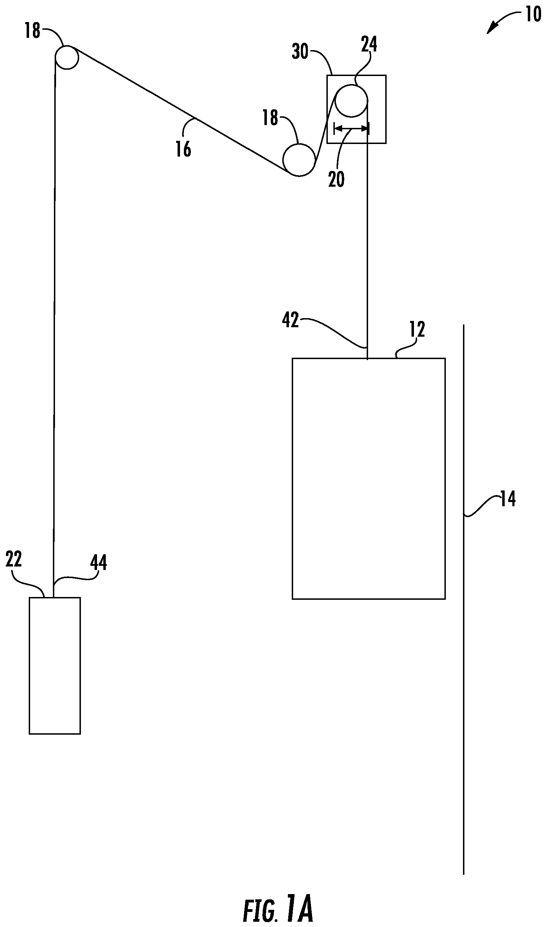

Shown in FIG. 1 is a schematic illustration of an exemplary elevator system 10. The elevator system 10 includes an elevator car 12 operatively suspended or supported in a hoistway 14 with one or more suspension members 16, such as ropes or belts. The one or more suspension members 16 interact with one or more sheaves 18 to be routed around various components of the elevator system 10. The one or more suspension members 16 are connected to a counterweight 22, which is used to help balance the elevator system 10 and reduce the difference in belt tension on both sides of a traction sheave 24 during operation. The hoistway 14 has a width 26 and a depth 28, and in some embodiments the counterweight 22 and elevator car 12 are positioned adjacently across the width 26 of the hoistway 14.

The sheaves 18 each have a diameter 20, which may be the same or different than the diameters of the other sheaves 18 in the elevator system 10. At least one of the sheaves is a traction sheave 24 driven by a machine 30. The machine 30 is disposed at and supported by a machine bedplate 32 extending across the hoistway 14 depth 28. Movement of traction sheave 24 by the machine 30 drives, moves and/or propels (through traction) the one or more suspension members 16 that are routed around the traction sheave 24. At least one of the sheaves 18 could be a diverter, deflector or idler sheave. Diverter, deflector or idler sheaves are not driven by the machine 30, but help guide the one or more suspension members 16 around the various components of the elevator system 10.

The elevator system 10 further includes one or more guide rails 34 to guide the elevator car 12 along a vertical length 36 of the hoistway 14. The elevator car 12 further includes one or more guide shoes 38 interactive with the guide rails 34 to guide the elevator car 12, and also may include safeties 40 interactive with the guide rail 34 to slow and/or stop motion of the elevator car 12 under certain conditions, such as an overspeed condition.

While the elevator system 10 shown is a 2:1 roping arrangement, it is to be appreciated that elevator systems 10 with other roping arrangements, for example, a 1:1 roping arrangement such as shown in FIG. 1A, are contemplated within the scope of the present disclosure. In the embodiment of FIG. 1, the suspension members 16 terminate in the hoistway 14 at a car end termination 42 nearest the elevator car 12 and at a counterweight end termination 44 nearest the counterweight 22, while in the 1:1 roping arrangement shown in FIG. 1A, the car end termination 42 is at the elevator car 12 and the counterweight end termination 44 is at the counterweight 22.

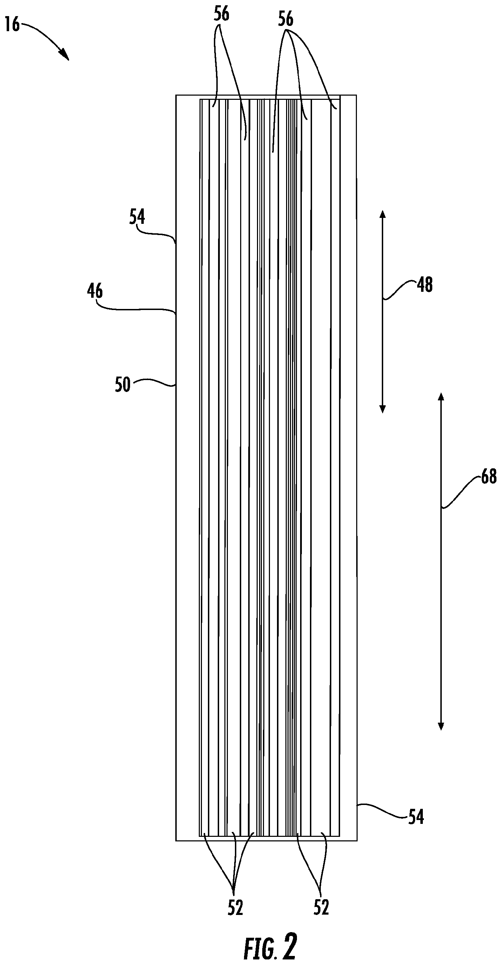

FIG. 2 provides a schematic cross-sectional view of an exemplary suspension member 16 construction or design. The suspension member 16 includes a plurality of fibers 46. The fibers 46 are continuous or discontinuous or combination of continuous and discontinuous over a suspension member length and, oriented generally such that a fiber length 48 is directed along the suspension member length 68. The fibers 46 are bonding to a polymer matrix 50 to form a tension member 52 for the suspension member 16. One or more such tension members 52 may be encased in a polymer jacket 54 to form the suspension member 16. For example, in the embodiment shown in FIG. 2, the suspension member 16 includes five tension members 52 layers encased in the jacket 54.

The fibers 46 may be formed of one or more of a number of materials, such as carbon, glass, polyester, nylon, aramid or other polyimide materials. Further, the fibers 46 may be organized into a grouping, such as a spun yarn. The matrix 50 may be formed of, for example a thermoset or thermoplastic material, while the jacket 54 may be formed from an elastomer material, such as thermoplastic polyurethane (TPU). The tension member 52 is further configured to have a fiber 46 density of 30% to 70% fibers 46 per unit of volume. In some embodiments, the fibers 46 may vary in size, length or circumference and may further be intentionally varied to provide a selected maximum fiber 46 density. The suspension member 16 further includes one or more thermoplastic material layers 56 between tension member 52 and matrix 50 layers.

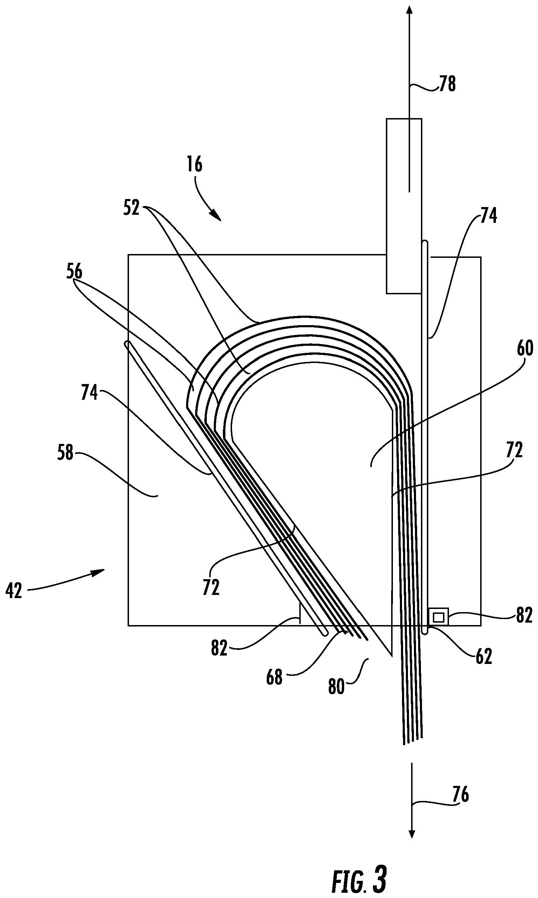

Referring now to FIG. 3, an embodiment of a termination 42 is shown which does not fall within the scope of the claimed invention, while it is to be appreciated that the present disclosure may be utilized at a termination 42. Termination 42 includes a socket 58 with a wedge 60 inserted thereinto. The wedge 60 has a wedge outer surface 72 that mates to a complimentary socket surface 74 of the socket 58. In some embodiments, the wedge outer surface 72 is parallel to the socket surface 74. Prior to inserting the wedge 60 into the socket 58, the suspension member 16 is inserted into the socket 58 at a socket end 62, and wrapped around the wedge 60. To enable wrapping of the suspension member 16 around the wedge 60, the thermoplastic layers 56 are softened, increasing flexibility of the suspension member 16 and therefore allowing for tightly bending the suspension member 16 around the wedge 60 without fracturing the tension members 52 or the fibers 46 included therein. In some embodiments, the thermoplastic layers 56 are softened by the application of heat, while in other embodiments the thermoplastic layers 56 are softened by application of a solvent material through, for example, soaking a selected portion of the suspension member 16 in solvent material. Once the selected bend around the wedge 60 is achieved, the softened thermoplastic layers 56, and thus the suspension member 16, is cured or hardened, a load 76 is applied to the suspension member 16 to fix the termination 42. In other embodiments, the load 76 may be applied prior to curing or hardening the softened thermoplastic layers 56.

The socket 58 has a socket exit 80 through which suspension member 16 is routed. In some embodiments, the socket exit 80 is shaped to reduce bending stresses on the suspension member 16 is the case of, for example, building sway. Additionally or alternatively, in some embodiments the socket exit includes an insert 82 of a relatively soft material to aid in reducing stresses on the suspension member 16.

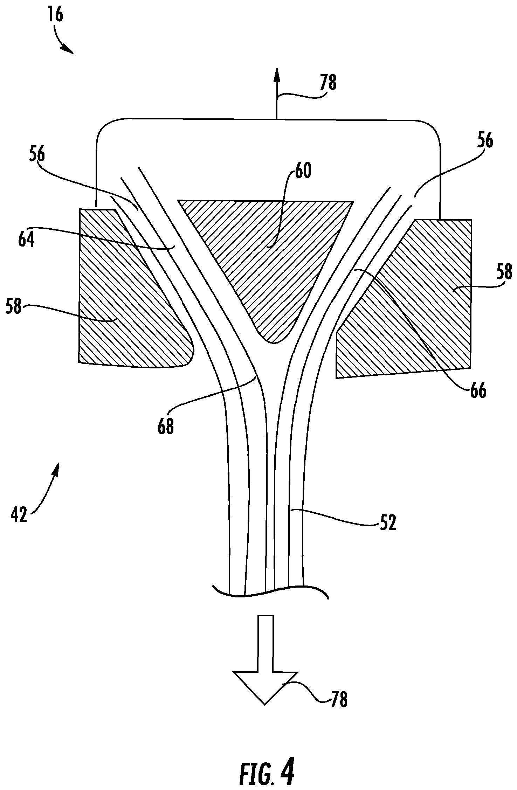

In another embodiment which does not fall within the scope of the claimed invention, as shown in FIG. 4, once the thermoplastic layers 56 are softened, the suspension member 16 is split partially along the suspension member length at, for example, a location between tension member 52 layers. The splitting of the suspension member 16 results in a first suspension member portion 64 and a second suspension member portion 66. The wedge 60 is placed between the first suspension member portion 64 and the second suspension member portion 66, after which the softened thermoplastic layers 56, and thus the suspension member 16, is cured or hardened, a load 76 is applied to the suspension member 16 to fix the termination 42. In other embodiments, the load 76 may be applied prior to curing or hardening the softened thermoplastic layers 56. As shown, a resulting reaction 78 is aligned with load 76 to avoid creating a bending moment at the termination 42.

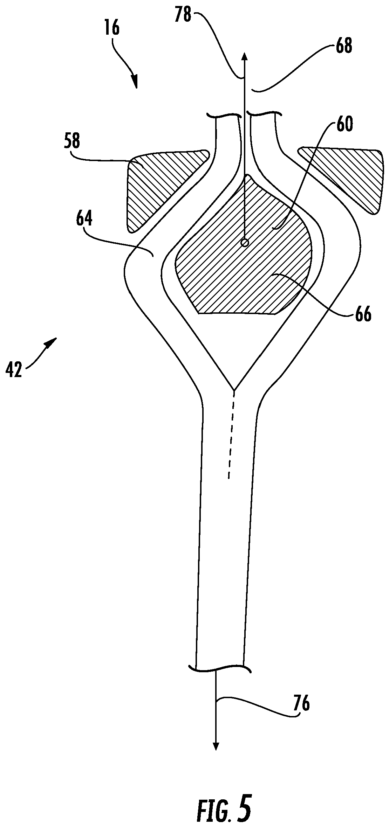

In another embodiment which does not fall within the scope of the claimed invention, as shown in FIG. 5, after the wedge 60 is inserted between the first suspension member portion 64 and the second suspension member portion 66, the first suspension member portion 64 and the second suspension member portion 66 are wrapped around the wedge 60, in some embodiments so the wedge 60 is enclosed in the suspension member 16. In some embodiments, the wedge 60 and the socket 58 may be mutually compressed by bolts or other mechanical means to generate through-thickness compression of portions 64 and 66. A load 76 is applied to the suspension member 16 to fix the termination 42. In other embodiments, the load 76 may be applied prior to curing or hardening the softened thermoplastic layers 56.

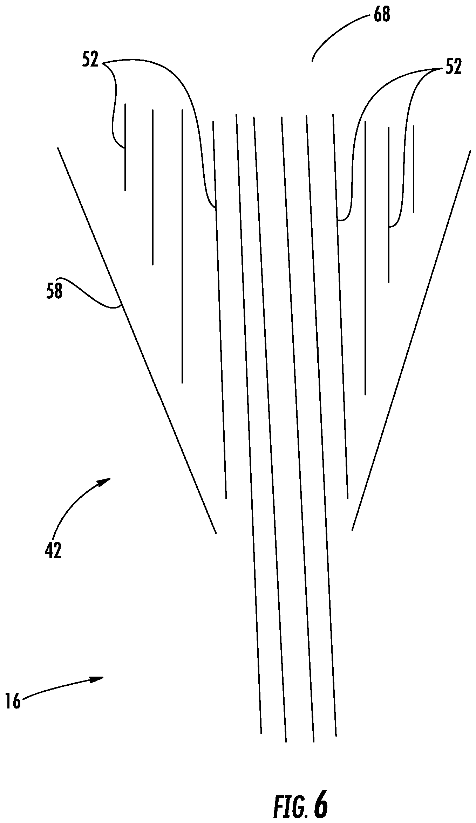

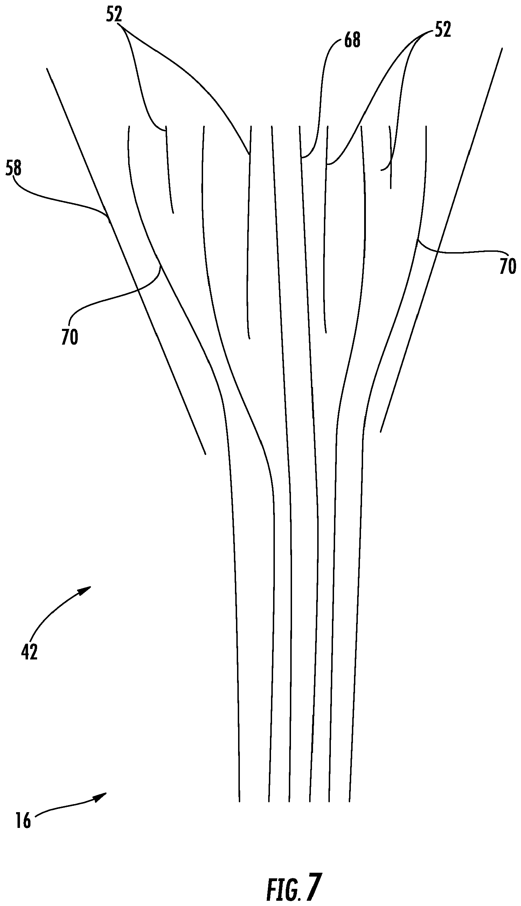

Referring now to the embodiments shown in FIG. 6 and 7, a wedge-shape is formed in the suspension member 16 itself by the addition of material plies at the suspension member end 68, which is then inserted into and retained at the socket 58. For example, as shown in FIG. 6, additional tension member 52 layers are secured to the suspension member 16, forming a selected wedge shape at the suspension member end 68. The tension member 52 layers may be bonded or cured to the suspension member 16 as shown in FIG. 6, and/or alternatively may be secured to the suspension member 16 by a plurality of mechanical fasteners, such as pins, bolts, screws or rivets. In some embodiments, such as that of FIG. 6, the wedge shape is formed by adding tension member 52 layers of successively shorter length to the suspension member 16. The additional tension member 52 layers may be cured or hardened after installation at the suspension member 16, or alternatively may be cured or hardened upon installation at the socket 58.

Referring now to FIG. 7, the wedge shape may be formed in the suspension member end 68 in other ways. For example, as shown in the embodiment of FIG. 7, additional tension member 52 layers are added at the suspension member end 68 between outer tension member layers 70 of the suspension member 16, thus the outer tension member layers 70 of the suspension member 16 are continuous along the suspension member 16 length. The wedge shape is formed by adding tension member 52 layers of successively shorter length into the suspension member 16. The additional tension member 52 layers may be cured or hardened after installation at the suspension member 16, or alternatively may be cured or hardened upon installation at the socket 58. As shown, in some embodiments the additional tension member layers 52 of shorter length may be alternated with full-length tension member layers 52 in the suspension member construction. In some embodiments the additional tension members 52 may be made of materials different than tension members 70, for example, of other fiber reinforced composites or polymer layers without fiber reinforcement or non-polymer layers such as metallic or others.

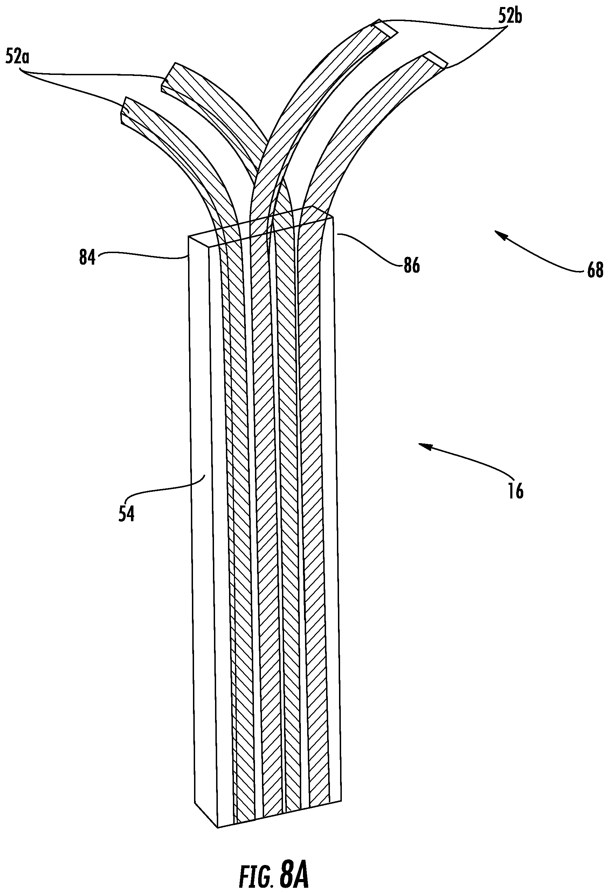

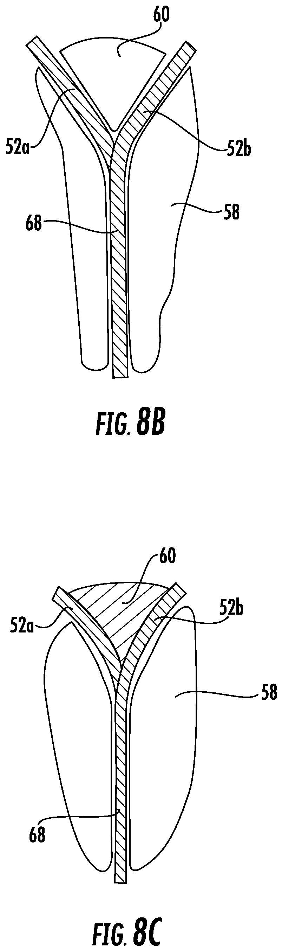

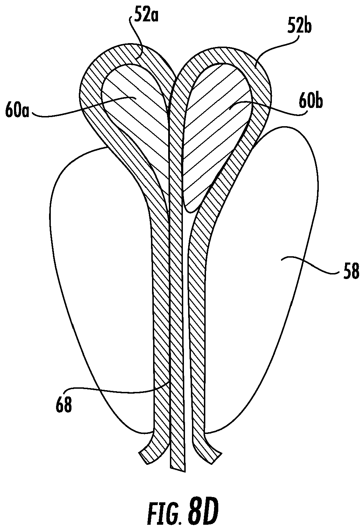

Referring now to FIGs. 8A-8D, another embodiment is illustrated. In the embodiment shown, the jacket 54 is removed from the suspension member end 68. The tension members 52 are then selectively curved or moved toward a first lateral end 84 and a second lateral end 86. In some embodiments, the tension members 52 are alternatingly moved toward the first lateral end 84 and the second lateral end 86 to form groups of first tension members 52a and second tension members 52b. Referring now to FIG. 8b which does not fall within the scope of the claimed invention, the wedge 60 is inserted between the group of first tension members 52a and the group of second tension members 52b. Referring now to the embodiment of FIG. 8c, the wedge 60 is formed in the suspension member end 68 by adding material between the first tension members 52a and the second tension members 52b, with the additional material secured to the tension members 52 by adhesive or other means. In another embodiment, as shown in FIG. 8d which does not fall within the scope of the claimed invention, the first tension members 52a are wrapped around a first wedge 60a, while the second tension members 52b are wrapped around a second wedge 60b.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate in scope. Additionally, while various embodiments have been described, it is to be understood that aspects of the present disclosure may include only some of the described embodiments. Accordingly, the present disclosure is not to be seen as limited by the foregoing description, but is only limited by the scope of the appended claims.

## Claims

1. A suspension member (16) for suspending and/or driving an elevator car (12) of an elevator system (10) comprising:
a plurality of tension members (52) extending along a length of the suspension member (16) including a plurality of fibers extending along the length of the suspension member (16) bonded into a polymer matrix (50);
a jacket (54) substantially retaining the plurality of tension members (52); and
wherein the suspension member (16) is configured to be deformed at a suspension member end (68) to allow for installation of the suspension member end (68) into a termination assembly of the elevator system (10),
wherein the suspension member (16) includes a wedge-shaped cross-section at the suspension member end (68),
**characterised in that** the wedge-shaped cross-section is formed via the addition of additional suspension member layers at an external surface of the suspension member (16) at the suspension member end (68), and/ or
**in that** the wedge-shaped cross-section is formed via the addition of additional suspension member layers between internal surfaces of the suspension member (16) at the suspension member end (68).

2. The suspension member (16) of claim 1, wherein the plurality of fibers are one or more of carbon, glass, polyester, nylon or aramid fibers.

3. The suspension member (16) of claim 1 or 2, wherein the plurality of fibers extend continuously along the length of the suspension member (16).

4. The suspension member (16) of any preceding claim, further comprising one or more thermoplastic layers disposed in the suspension member (16), the one or more thermoplastic layers configured to be softened at a suspension member end (68) to allow for deformation of the suspension member end (68).

5. The suspension member (16) of any preceding claim, wherein the suspension member end (68) is configured to be deformed by application of heat and/or solvent to the suspension member end (68).

6. An elevator system (10), comprising:
a hoistway (14);
an elevator car (12) disposed in the hoistway (14);
a suspension member (16) as claimed in any preceding claim, operably connected to the elevator car (12) to suspend and/or drive the elevator car (12) along the hoistway (14), the suspension member (16) further including
a termination assembly disposed in the hoistway (14) and operably connected to a suspension member end (68) of the suspension member (16),
wherein the suspension member (16) is configured to be deformed at the suspension member end (68) to allow for installation of the suspension member end (68) into the termination assembly.

7. The elevator system (10) of claim 6 , wherein the wedge-shaped cross-section of the suspension member end (68) is installed into a socket (58) of the termination assembly.

8. The suspension member (16) or elevator system (10) of any preceding claim, wherein the suspension member end (68) is deformed by dividing each tension member of the plurality of tension members (52).

9. The suspension member (16) or elevator system (10) of any preceding claim, wherein the suspension member end (68) is deformed by selectively moving or curving tension members of the plurality of tension members (52) into first tension members and second tension members.

10. A method of installing a suspension member (16) of an elevator system (10) into a termination assembly comprising:
deforming a suspension member end (68);
reforming the suspension member end (68) to a selected shape;
inserting the suspension member end (68) into the termination assembly;
curing and/or hardening the suspension member end (68); and
applying a load to the suspension member end (68) or to a socket (58) of the termination assembly to secure the suspension member end (68) in the termination assembly,
wherein the suspension member (16) is reformed to include a wedge-shaped cross-section at the suspension member end (68), and the wedge-shaped cross-section is formed via the addition of additional suspension member layers between internal surfaces of the suspension member (16) at the suspension member end (68).

11. The method of claim 10, wherein the load is applied to the suspension member end (68) prior to curing and/or hardening of the suspension member end (68).

## Patentansprüche

1. Aufhängungselement (16) zum Aufhängen und/oder Antreiben einer Aufzugskabine (12) eines Aufzugssystems (10), Folgendes umfassend:
eine Vielzahl von Zugelementen (52), die sich entlang einer Länge des Aufhängungselements (16) erstrecken, das eine Vielzahl von Fasern beinhaltet, die sich entlang der Länge des Aufhängungselements (16) erstrecken, das in einer Polymermatrix (50) gebondet ist;
einen Mantel (54), der im Wesentlichen die Vielzahl von Zugelementen (52) hält; und
wobei das Aufhängungselement (16) dazu konfiguriert ist, an einem Aufhängungselementende (68) deformiert zu werden, um eine Installation des Aufhängungselementendes (68) in einer Abschlussanordnung des Aufzugssystems (10) zuzulassen,
wobei das Aufhängungselement (16) an dem Aufhängungselementende (68) einen keilförmigen Querschnitt beinhaltet,
**dadurch gekennzeichnet, dass** der keilförmige Querschnitt über den Zusatz von zusätzlichen Aufhängungselementschichten an einer externen Oberfläche des Aufhängungselements (16) an dem Aufhängungselementende (68) gebildet wird, und/oder
dadurch, dass der keilförmige Querschnitt über den Zusatz von zusätzlichen Aufhängungselementschichten zwischen internen Oberflächen des Aufhängungselements (16) an dem Aufhängungselementende (68) gebildet wird.

2. Aufhängungselement (16) nach Anspruch 1, wobei die Vielzahl von Fasern aus einem oder mehreren von Kohlenstoff-, Glas-, Polyester-, Nylon- oder Aramidfasern besteht.

3. Aufhängungselement (16) nach Anspruch 1 oder 2, wobei sich die Vielzahl von Fasern kontinuierlich entlang der Länge des Aufhängungselements (16) erstreckt.

4. Aufhängungselement (16) nach einem der vorhergehenden Ansprüche, ferner eine oder mehrere thermoplastische Schichten umfassend, die in dem Aufhängungselement (16) angeordnet sind, wobei die eine oder die mehreren thermoplastischen Schichten dazu konfiguriert sind, an einem Aufhängungselementende (68) erweicht zu werden, um eine Deformation des Aufhängungselementendes (68) zuzulassen.

5. Aufhängungselement (16) nach einem der vorhergehenden Ansprüche, wobei das Aufhängungselementende (68) dazu konfiguriert ist, durch Anwenden von Wärme und/oder eines Lösungsmittels an dem Aufhängungselementende (68) deformiert zu werden.

6. Aufzugssystem (10), Folgendes umfassend:
einen Schacht (14);
eine Aufzugskabine (12), die in dem Schacht (14) angeordnet ist;
ein Aufhängungselement (16) nach einem der vorhergehenden Ansprüche, das mit der Aufzugskabine (12) wirkverbunden ist, um die Aufzugskabine (12) aufzuhängen und/oder entlang des Schachts (14) anzutreiben, wobei das Aufhängungselement (16) ferner Folgendes beinhaltet:
eine Abschlussanordnung, die in dem Schacht (14) angeordnet und mit einem Aufhängungselementende (68) des Aufhängungselements (16) wirkverbunden ist,
wobei das Aufhängungselement (16) dazu konfiguriert ist, an dem Aufhängungselementende (68) deformiert zu werden, um eine Installation des Aufhängungselementendes (68) in der Abschlussanordnung zuzulassen.

7. Aufzugssystem (10) nach Anspruch 6, wobei der keilförmige Querschnitt des Aufhängungselementendes (68) in einer Fassung (58) der Abschlussanordnung installiert ist.

8. Aufhängungselement (16) oder Aufzugssystem (10) nach einem der vorhergehenden Ansprüche, wobei das Aufhängungselementende (68) durch Teilen jedes Zugelements von der Vielzahl von Zugelementen (52) deformiert wird.

9. Aufhängungselement (16) oder Aufzugssystem (10) nach einem der vorhergehenden Ansprüche, wobei das Aufhängungselementende (68) durch selektives Bewegen oder Biegen von Zugelementen von der Vielzahl von Zugelementen (52) in erste Zugelemente und zweiten Zugelemente deformiert wird.

10. Verfahren zum Installieren eines Aufhängungselements (16) eines Aufzugssystem (10) in eine Abschlussanordnung, Folgendes umfassend:
Deformieren eines Aufhängungselementendes (68);
Neubilden des Aufhängungselementendes (68) in einer ausgewählten Form;
Einsetzen des Aufhängungselementendes (68) in eine Abschlussanordnung;
Vulkanisieren und/oder Aushärten des Aufhängungselementendes (68); und
Anwenden einer Last auf das Aufhängungselementende (68) oder auf eine Fassung (58) der Abschlussanordnung, um das Aufhängungselementende (68) in der Abschlussanordnung zu sichern,
wobei das Aufhängungselement (16) so neugebildet wird, dass es einen keilförmigen Querschnitt an dem Aufhängungselementende (68) beinhaltet und der keilförmige Querschnitt über den Zusatz von zusätzlichen Aufhängungselementschichten zwischen internen Oberflächen des Aufhängungselements (16) an dem Aufhängungselementende (68) gebildet wird.

11. Verfahren nach Anspruch 10, wobei die Last vor dem Vulkanisieren und/oder Aushärten des Aufhängungselementendes (68) an dem Aufhängungselementende (68) angewendet wird.

## Revendications

1. Élément de suspension (16) pour suspendre et/ou entraîner une cabine d'ascenseur (12) d'un système d'ascenseur (10) comportant :
une pluralité d'éléments de tension (52) s'étendant le long d'une longueur de l'élément de suspension (16) comprenant une pluralité de fibres s'étendant le long de la longueur de l'élément de suspension (16) collé dans une matrice polymère (50) ;
une gaine (54) retenant sensiblement la pluralité d'éléments de tension (52) ; et
dans lequel l'élément de suspension (16) est configuré pour être déformé à une extrémité (68) de l'élément de suspension pour permettre l'installation de l'extrémité (68) de l'élément de suspension dans un ensemble de terminaison du système d'ascenseur (10),
dans lequel l'élément de suspension (16) comporte une section transversale en forme de coin à l'extrémité (68) de l'élément de suspension,
**caractérisé en ce que** la section transversale en forme de coin est formée via l'ajout de couches supplémentaires de l'élément de suspension sur une surface externe de l'élément de suspension (16) à l'extrémité (68) de l'élément de suspension, et/ou
**en ce que** la section transversale en forme de coin est formée via l'ajout de couches supplémentaires de l'élément de suspension entre les surfaces internes de l'élément de suspension (16) à l'extrémité (68) de l'élément de suspension.

2. Élément de suspension (16) selon la revendication 1, dans lequel la pluralité de fibres est constituée d'une ou de plusieurs fibres parmi des fibres de carbone, de verre, de polyester, de nylon ou d'aramide.

3. Élément de suspension (16) selon la revendication 1 ou 2, dans lequel la pluralité de fibres s'étend en continu le long de la longueur de l'élément de suspension (16).

4. Élément de suspension (16) selon une quelconque revendication précédente, comprenant en outre une ou plusieurs couches thermoplastiques disposées dans l'élément de suspension (16), les une ou plusieurs couches thermoplastiques étant configurées pour être assouplies à une extrémité (68) de l'élément de suspension afin de permettre la déformation de l'extrémité (68) de l'élément de suspension.

5. Élément de suspension (16) selon une quelconque revendication précédente, dans lequel l'extrémité (68) de l'élément de suspension est configurée pour être déformée par l'application de chaleur et/ou de solvant sur l'extrémité (68) de l'élément de suspension.

6. Système d'ascenseur (10), comprenant :
une cage (14) ;
une cabine d'ascenseur (12) disposée dans la cage (14) ;
un élément de suspension (16) selon une quelconque revendication précédente, relié de manière opérationnelle à la cabine d'ascenseur (12) pour suspendre et/ou entraîner la cabine d'ascenseur (12) le long de la cage (14), l'élément de suspension (16) comprenant en outre
un ensemble de terminaison disposé dans la cage (14) et relié de manière opérationnelle à une extrémité (68) de l'élément de suspension de l'élément de suspension (16),
dans lequel l'élément de suspension (16) est configuré pour être déformé à l'extrémité (68) de l'élément de suspension afin de permettre l'installation de l'extrémité (68) de l'élément de suspension dans l'ensemble de terminaison.

7. Système d'ascenseur (10) selon la revendication 6, dans lequel la section transversale en forme de coin de l'extrémité (68) de l'élément de suspension est installée dans une prise (58) de l'ensemble de terminaison.

8. Élément de suspension (16) ou système d'ascenseur (10) selon une quelconque revendication précédente, dans lequel l'extrémité (68) de l'élément de suspension est déformée en divisant chaque élément de tension de la pluralité d'éléments de tension (52).

9. Élément de suspension (16) ou système d'ascenseur (10) selon une quelconque revendication précédente, dans lequel l'extrémité (68) de l'élément de suspension est déformée en déplaçant ou en courbant de manière sélective les éléments de tension de la pluralité d'éléments de tension (52) dans les premiers éléments de tension et les seconds éléments de tension.

10. Procédé d'installation d'un élément de suspension (16) d'un système d'ascenseur (10) dans un ensemble de terminaison comprenant :
la déformation d'une extrémité (68) de l'élément de suspension ;
la reformation de l'extrémité (68) de l'élément de suspension dans une forme sélectionnée ;
l'insertion de l'extrémité (68) de l'élément de suspension dans l'ensemble de terminaison ;
le traitement et/ou le durcissement de l'extrémité (68) de l'élément de suspension ; et
l'application d'une charge à l'extrémité (68) de l'élément de suspension ou sur une prise (58) de l'ensemble de terminaison pour fixer l'extrémité (68) de l'élément de suspension dans l'ensemble de terminaison,
dans lequel l'élément de suspension (16) est reformé afin d'inclure une section transversale en forme de coin à l'extrémité (68) de l'élément de suspension, et la section transversale en forme de coin est formée via l'ajout de couches supplémentaires de l'élément de suspension entre les surfaces internes de l'élément de suspension (16) à l'extrémité (68) de l'élément de suspension.

11. Procédé selon la revendication 10, dans lequel la charge est appliquée à l'extrémité (68) de l'élément de suspension avant le traitement et/ou le durcissement de l'extrémité (68) de l'élément de suspension.
